Europäisches Patentamt

(19) European Patent Office

Office européen des brevets

(11) Publication number: **0 185 911**
**A2**

(12) **EUROPEAN PATENT APPLICATION**

(21) Application number: **85114531.8**

(22) Date of filing: **15.11.85**

(51) Int. Cl.⁴: **B 62 D 5/06**

(30) Priority: **16.11.84 IT 362484**

(43) Date of publication of application:
**02.07.86 Bulletin 86/27**

(84) Designated Contracting States:
**DE FR GB SE**

(71) Applicant: **RIVA CALZONI S.p.A.**
**Via Emilia Ponente 72**
**I-40133 Bologna(IT)**

(72) Inventor: **Nascetti, Cesare**
**Via E. Fermi 6**
**I-40033 Casalecchio Di Reno Bologna(IT)**

(74) Representative: **Modiano, Guido et al,**
**MODIANO, JOSIF, PISANTY & STAUB Modiano &**
**Associati Via Meravigli, 16**
**I-20123 Milan(IT)**

(54) Hydraulic steering system for motor vehicles.

㊗ The system comprises a conventional first actuator assembly including a main screw shaft (10) and a second actuator assembly (2) comprising a tang (49) coaxially rigid with the main shaft and being housed within a case (47). On the tang is a sleeve (61) of a secondary screw shaft (62) supported coaxially with the tang, and coupled rotatively therewith through an elastic key (72). Between the tang and sleeve is interposed an adapter bush (52) axially slidable along the tang and driving, through a linkage (88), a distributor (87) adapted to connect the delivery conduit (96) of a feed pump (95) to a jack driving the motor vehicle steering means. The elastic key (72) of the second assembly being preloaded at a greater force than that of the first assembly (1). On the secondary screw shaft there being a travel limit device (73-85) for the first and second actuator assemblies for limiting the steering wheel rotation.

FIG. 9

EP 0 185 911 A2

0185911

"HYDRAULIC STEERING SYSTEM FOR MOTOR VEHICLES"

This invention relates to a hydraulic steering system for motor vehicles.

For road traffic safety reasons, well-defined rules of law require that motor vehicles with power assisted steering have the steering servo-mechanism completely split in the hydraulic supply section. This is in order to retain steering control of very heavy or special vehicles which, in case of failure of a single hydraulic system due to the heavy loads imposed on the steering axles, could no longer be steered manually by mechanical means with the operating forces provided for by the law.

To comply with such regulations, dual independent circuit steering systems have been proposed which are characterized essentially by the provision of a mechanical steering box including a ball screw and two independent coaxial hydraulic distributors.

These distributors are driven axially or angularly simultaneously by a screw shaft through a single preloaded spring connection.

Furthermore, said prior steering system is provided at one end of its output shaft with two sets of dual travel limit valves, which are adjustable and independent as relates to the hydraulic limitation of the steering angle and on reaching the maximum steering angle, remotely control two respective pressure limiting valves in the two external supply circuits which cut off the hydraulic power action at the wheel's maximum steering angle.

In the prior hydraulic steering system, the two circuits operate in parallel and their course of action is not differentiated from the steering effort in that they act simultaneously on exceeding a single common threshold value. Further, the dual adjustment of the maximum steering angle is somewhat complicated and should be carried out with the system in operation by skilled personnel if timing shifts and undue hydraulic stresses on the travel limit stops are to be avoided.

It is the technical aim of this invention to provide a hydraulic steering system whereby the foregoing problems are all effectively attenuated.

The above aim is achieved by a hydraulic steering system for motor vehicles, characterized in that it comprises a first actuator assembly having a piston connected to the motor vehicle steering means and guided sealingly within a cylindrical box wherein it defines two chambers individually connectable to the delivery line of a pressurized fluid feed pump and to a discharge line, respectively, through a distributor housed within the piston and driven, by means of a lever, from a nut screw supported coaxially within the piston and being coupled rotatively to the latter by an elastic key, said nut screw being engaged reversibly by a main screw shaft carried rotatably in the box, and further differentiated in that it comprises a second actuator assembly comprising a tang made coaxially rigidly associated with said main screw shaft and being housed within a case associated with said box, on which tang there is a sleeve of a secondary screw shaft supported coaxially with said tang and being coupled rotatively with the latter through an elastic key, between said tang and sleeve there being a differential bush axially slidable along said tang and driving, through a linkage, a distributor adapted to connect the delivery line of a second pressurized fluid feed pump to a jack driving the motor vehicle steering means, the elastic key of said second assembly being preloaded at a greater force than the first assembly elastic key and on said secondary screw shaft there being a travel limit device for the first and second actuator assemblies, of the mechanical adjustment type for limiting the steering wheel rotation, to which there corresponds simultaneously the discontinuance of the hydraulic force from the two circuits at the maximum steering angle.

Further features of this invention will become apparent from the following detailed description of a preferred embodiment thereof, to be taken in conjunction with the accompanying illustrative drawings, where:

Figure 1 is a longitudinal cross-section, partly diagramatical, view of a hydraulic steering system according to the subject invention;

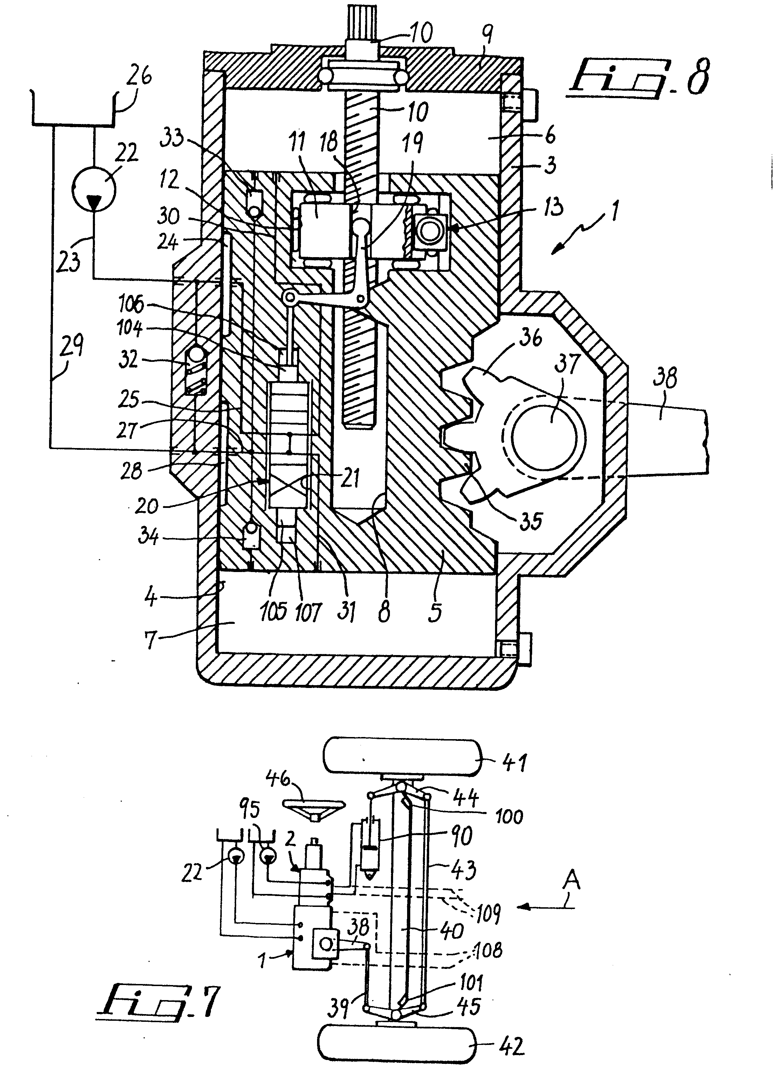

Figures 2,3,4,5,6 are sectional views taken on the planes II-II, III-III, IV-IV, V-V, and VI-VI of Figure 1, with Figure 3 being to an enlarged scale with respect to the others;

Figure 7 is an installation diagram of the hydraulic steering system of the preceding Figures as applied to the steering wheels of a motor vehicle;

Figures 8,9 are enlarged scale views of the two assemblies which make up the hydraulic steering system of Figure 1;

Figure 10 is a view showing another embodiment of the second actuator assembly; and

Figures 11,12 are views taken on the planes XI-XI and XII-XII of Figures 10 and 11.

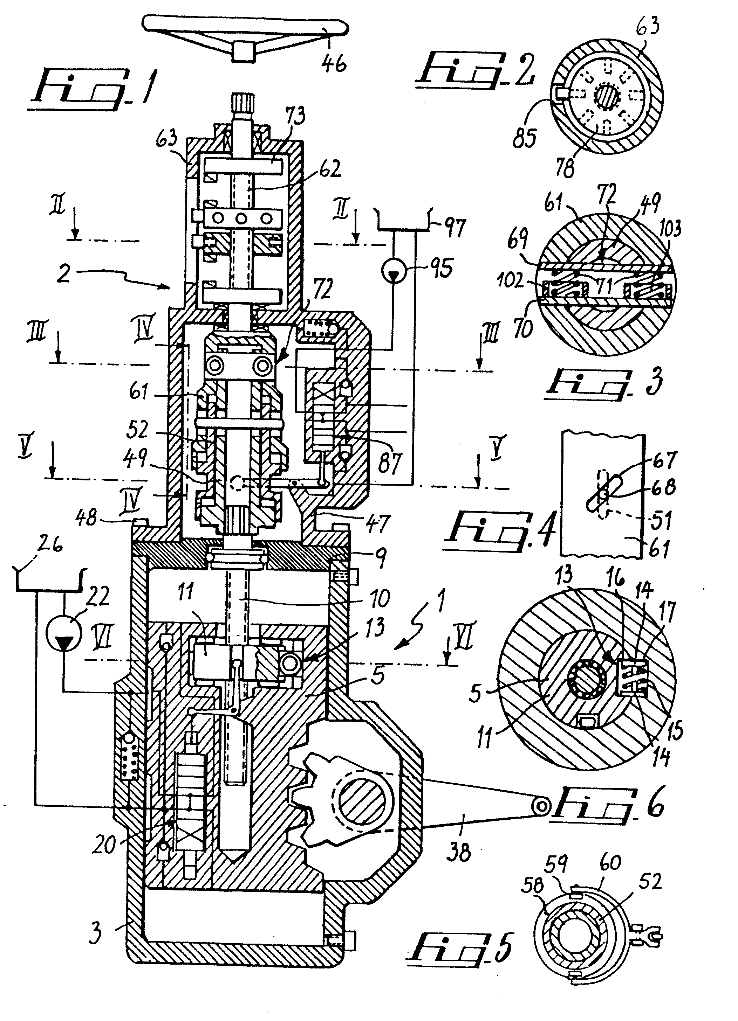

It should be noted that in the description that follows the expressions "above", "below", "upper" and "lower" refer for convenience to the orientation of the steering system in Figures 1,8,9, which orientation may be, however, any selected one.

With reference to the drawing figures, and specifically to Figure 1, a hydraulic steering system according to the invention comprises two actuator assemblies 1 and 2 associated coaxially with each other. More specifically, the assembly 1 comprises a box 3 enclosing a cylindrical compartment 4 wherein a piston 5 is housed slidably. The piston 5 divides the compartment 4 into two opposed chambers 6 and 7 defining a blind hole 8 which extends axially.

In the flange 9 which forms the upper face of the box 3, there is supported rotatably, through a rolling bearing, a threaded shaft 10 which extends coaxially with the piston 5 in the hole 8.

On the shaft 10, referred to as the main screw shaft hereinafter, there is engaged a nut screw 11 comprising a cylindrical body supported, through thrust bearings, in a cavity 12 of the piston 5. The nut screw 11 and piston 5 are interconnected rotatively and axially. The rotary connection is accomplished by means of an elastic key 13 (see Figure 6) composed of a pair of plates 14 having a preloaded spring 15 interposed therebetween. Each plate 14 rests with one half on a shoulder 16 of the nut screw 11, and with the other half on a shoulder 17 of the piston 5.

The nut screw 11 is driven from the main screw shaft 10 through a high mechanical output bearing system not shown in the drawing because conventional with hydraulic steering systems. The coupling of the nut screw 11 with the screw shaft 10 is of the reversible type, i.e. on threading in the shaft 10 the nut screw is caused to move, whereas on moving the nut screw the shaft 10 is caused to rotate.

The nut screw 11 is formed externally with an axial recess 18 wherein there engages a right-angle lever 19 journalled within the piston 5. The lever 19 drives a hydraulic distributor 20 of the so-called open-center type which is housed in a seat 21 of the piston 5 and only shown diagramatically in the figures for clarity of illustration.

The distributor 20 controls the delivery of oil under pressure into one of the two chambers 6,7 to displace the piston 5. To this end, a pump 22 is provided which has a delivery side 23 connected to an axially elongate recess 24 in the piston 5 through the wall of the box 3.

The recess 24 is communicated centrally with the seat 21 of the distributor through a conduit 25. The oil returns    from the seat 21 to the reservoir 26 through  a conduit 27, a further recess 28 in the piston, and a conduit 29 connecting the recess 28 to the reservoir 26.

The distributor 20 has three settings. In the middle setting, shown in Figure 1, it places the conduit 25 in direct communication with the conduit 27, such that the oil being delivered is discharged directly into the reservoir 26.

By contrast, in a second setting, with the distributor shifted downwards, the conduit 25 is communicated with the chamber 6 through a conduit 30, while the conduit 27 is simultaneously communicated with the chamber 7 through a conduit 31. Thus, the oil is allowed to flow back into the reservoir 26 on the piston moving down owing to the pressure within the chamber 6.

Lastly, in the third setting corresponding to the distributor being shifted upwards, connection is established between the pump delivery conduit and the chamber 7, while the chamber 6 is connected to the discharge side to allow the piston 5 to move upwards.

Conveniently, between the delivery 23 and return 29 conduits, there is a pressure valve 32 which can be calibrated, whilst between the conduit 27 and the chambers 6 and 7 there are valves 33,34 performing anti-cavitation functions during the movements of the piston 5.

The movement of the piston 5 is transferred to to the motor vehicle steering wheels through a gear which comprises a rack 35 formed externally of the piston 5 and being mesh engaged by a gear segment 36 keyed to a pin journalled in the box 3.

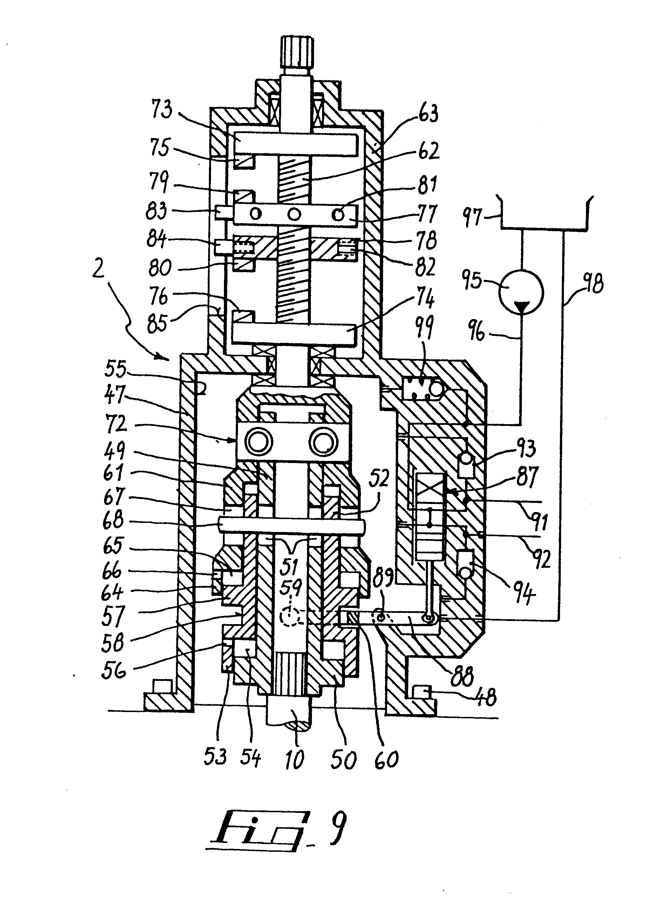

The pin 37 has one end external of the box 3, and to that end a radial arm 38 is keyed which is connected by a link 39 (see Figure 7) to the steering parallelogram of the motor vehicle.

That parallelogram is composed of the axle 40 on which the steering wheels 41,42 are mounted rotatably, and the cross-bar 43 articulated to the ends of a pair of levers 44,45 associated with the wheels.

The assembly described so far is substantially equivalent to the one disclosed in prior Italian Patent N. 1058.691 by this same Applicant and its operation may be summarized as follows.

Assuming that the actuator assembly 2 has been temporarily removed and that the steering wheel 46 is connected kinematically to the screw shaft 10, the operation of the steering wheel generates, owing to the resistance from the wheels, a tangential component on the nut screw 11 which results in the elastic key 13 being squeezed.

Since the piston 5 is inhibited from turning, the nut screw 11 will perform, relatively to the piston 5, a small angular movement which is transferred to the distributor 20 through the lever 19. The distributor 20, in moving toward one side or the other according to the diredtion of rotation of the nut screw 11, puts the oil delivery conduit in communication with the chamber 6 or 7 causing the piston 5 to slide in the box 3 and the radial arm 38 to oscillate, and thus orientation of the steering wheels 41,42 in a desired direction.

If the force on the key 13 is discontinued, the nut screw 11 moves back to its neutral or rest position, thereby the lever 19 returns, in turn, the distributor 20 to its center position setting whereat the conduits 25 and 27 are connected directly together. It should be noted that the supply of oil through the conduits 30,31 also occurs to the chambers 6,7 but has no effect on the opposed surfaces of the piston.

The assembly 1 would be unable to control the steering wheels if, for a reason whatever such as failure of the pump, the oil pressure is not available. For this reason, the assembly 2 is provided which cooperates with the assembly 1 to perform an independent auxiliary function.

The assembly 2 (see Figure 9) comprises a case 47 centered on the wall 9 of the box 3 and fastened by means of screws 48.

Within the case 47, there extends a hollow tang 49 coaxial with the screw shaft 10 and keyed to the splined end of the latter which extends into the case 47.

The hollow tang 49 has, in the proximity of the wall 9, a collar 50, and at a middle location, two slots 51 extending in the axial direction.

An adapter bush 52 is slidable along the tang 49 which defines, at the bottom end, a cup 53 in which the collar 50 is guided sealingly. The cup 53 defines with the collar 50 an annular chamber 54 which communicates with the compartment 55 delimited by the case 47 through a calibrated hole 56.

The bush 52, hereinafter referred to as differential for reasons to be explained, has, above the cup 53, an outer collar 57 which defines with the cup itself an annular groove 58. In the groove 58 there slide tangentially two roller-mounted pads 59 journalled to the ends of the prongs of a fork 60 articulated in the case 47 (see Figures 5 and 9). Above the bush 52 is a sleeve 61 connected rigidly and coaxially to a secondary screw shaft 62 rotatably supported in a case 63 rigid with the case 47 and adapted for connection to the steering wheel 46. The sleeve 61 has a cup 64 which, with the collar 57 in the bush, defines an annular chamber 65 in communication with the compartment 55 through a calibrated hole 66.

In the sleeve 61 there are formed two slots 67, inclined at an angle of 45° to the axis of the screw shaft. The slots 67 are diametrally opposed and confront the slots 51 formed in the hollow tang 49.

A pin 68 led diametrally across the bush 52 engages externally in the slots 67, and internally in the slots 51. Thus, the bush 52 is coupled rotatively but is slidable axially with respect to the hollow tang 49, while being allowed to perform angular and axial movements relatively to the sleeve 61.

As shown best in Figure 3, the sleeve 61 and hollow tang 49 have small diametral windows through which two plates 69,70 are positioned which are held apart by preloaded springs 71, which form an elastic key 72 functionally similar to the key 13. The elastic key 72 provides rotary connection between the sleeve 61 and the hollow tang 49, thereby the motion can be transmitted from the secondary screw shaft 62 to the main screw shaft 10.

It is important to observe that the springs 71 of the key 72 are preloaded at a greater force than that preloading the spring 15 relative to the key 13, thereby by twisting the screw shaft 62, first the spring 15 is compressed and then, but only if the resisting force exceeds a given value, the two springs 71.

On the opposed ends of the screw-shaft 62 there are keyed two flanges 73,74 which have, on their juxtaposed faces, a respective radial dog 75,76 (see Figure 9).

The dogs 75,76 act as travel stops for a pair of adjustable detents composed of a pair of ring nuts 77,78 threaded onto the screw shaft 62. The ring nuts 77,78 are provided, on their non-adjacent faces, with dogs 79,80 adapted to abut the dogs 75 and 76, and on their peripheries, with angularly distributed radial threaded holes 81,82 whereinto there are threaded two respective bolts 83,84. The bolt heads engage in a slot 85 provided axially in the case 63.

The dogs 75,76 and 79,80 have a smaller height than the pitch of the threads on the screw shaft 62 and are timed together such that a torque on the screw shaft 62 can be transferred tangentially to the dogs 75,76 without the ring nuts 81,82 becoming locked against the flanges 73,74. The elements 73-85 make up the stop device for the steering wheel 46, and accordingly, for the steering wheels at the maximum steering angle.

The assembly 2 controls a hydraulic circuit which acts on the steering wheels 41,42 separately from the assembly 1. That circuit comprises a distributor 87 of the open center type, housed in a receptacle in the case 47. The distributor is connected at one end to a lever 88 of the fork 60 which is journalled at 89 to the case 47. The distributor 87 controls the supply of oil under pressure to a double-acting jack 90, the cylinder whereof is connected to the motor vehicle main frame and the piston whereof is connected to the lever 44 rigid with the steering wheel 41 (see Figure 7).

The two chambers of the jack 90 are connected to the case 47 by two conduits 91,92. Between the conduits 91,92 and the compartment 55 of the case 47 are interposed one-way valves 93,94 having anti-cavitation functions. The pressurized oil is supplied from a pump 95 through a delivery conduit 96 and returned to the reservoir 97 through a return conduit 98.

Differently from the conduit 98 which opens directly into the case 47, the delivery conduit 96 is controlled by the distributor 87 according to whether the pressurized oil is to be conveyed to the conduit 91 or the conduit 92 to shorten or lengthen the jack 90. Between the delivery conduit 96 and the compartment 95 there is a pressure valve 99 which may be calibrated.

The distributor 87, like the previous distributor 20, may also be set at one of three positions. In the rest or neutral position setting, corresponding to that shown in Figure 1, the delivery 96 is taken directly through the distributor into the case compartment 55 and returned to the reservoir 97 throughthe conduit 98. During this phase, the oil delivery reaches both chambers of the jack 90 and has no effect on the opposed surfaces of the piston.

With the distributor shifted upwardly, the delivery conduit 96 is connected to the conduit 91, thereby the pressurized oil will reach the corresponding chamber of the jack 90. The other chamber of the jack is connected to discharge by the distributor through the conduit 92, compartment 55, and conduit 98.

Finally, in the third position with the distributor shifted downwardly, the pressurized oil

- 13 -

0185911

is conveyed to the conduit 92 so as to produce a contrary effect on the jack 90 and turning of the steering wheels in the opposite direction to the former. The hydraulic steering system described above generally operates as follows. With the vehicle travelling straight in the direction A (see Figure 7), the two distributors 20 and 87 are both at the rest or neutral position setting, and the delivery oil, supplied from the pumps 22 and 95, is allowed to flow back into the respective reservoirs 26 and 97.

If the driving conditions are such that the elastic key 13 is never compressed (such as may occur while driving straight ahead), the lever 19 does not oscillate and the distributor 20 remains in its rest position. Thus, the delivery conduit 23 continues to be connected to the return conduit 29 and the delivery oil is discharged freely into the reservoir 26 as already described. The same occurs in the assembly 2 wherein, with the springs of the elastic key 62 preloaded at a greater force than the spring 15 of the key 13, the sleeve 61 will remain stationary with respect to the hollow tang 49, so that once again no oscillation of the fork 60 occurs which can shift the distributor 87, and the delivery oil from the conduit 96 flows unrestrictedly into the reservoir 97 through the conduit 98. Where instead the steering effort in cornering is greater and such as to result in the key 13 being compressed, but not the key 72, the nut screw 11 performs a limited angular excursion with respect to the piston 5, which

excursion is, however, adequate to cause, by means of the lever 19, a sliding movement of the distributor 20 in the seat 21 and accordingly, the delivery conduit 23 to be connected to the chamber 6 or 7 depending on whether said sliding movement occurs in a downward or upward direction. On sending oil under pressure into the chamber 6 or 7, the piston 5 is moved and, through the gear 35,36, applies a force to the steering parallelogram which is maintained until the elastic key 13 is compressed. In fact, on removing the force from the steering wheel 46, the key 13 is restored to its elongate attitude, and the lever 19 is returned to its rest position causing the distributor 20 to be also moved to its neutral position. It should be noted that, on completion of the cornering operation, if the steering wheel is abandoned,    the wheels 41,42 will tend to move back to their centered or straight condition since both distributors 20 and 87 are at their neutral positions. Thus, the parallelogram 43-45, through the link 39, entrains the lever 38 angularly which, through the gear 35-36, will cause the piston 5 and nut screw 11 to be moved and by reaction the screw shaft 10 to rotate. The latter being rigid with the hollow tang 49, it will rotate the secondary screw shaft 62 through the key 72, and eventually the steering wheel 46 which will smoothly turn under the driver's hands. During that phase, no members, in particular of the assembly 2, can in the least interfere with reversibility until the steering system is returned to centre.

It should be noted that as the piston 5 slides in the box 3, the oil from the chamber 6 can be transferred into the chamber 7 or viceversa through the conduits 30 and 31 connected by the distributor 20, while oil transfer between the opposed chambers of the jack 90 owing to the entrainment brought about by the lever 44 takes place through the middle portion of the distributor 87. Where the steering effort required by the wheels is such that the resultant of the hydraulic reaction thrust, which is proportional to the preset pressure, plus the load on the elastic key 13 exceeds the load on the elastic key 72, and the latter begins to be squeezed, the actuator assembly 2 acts progressively to cause the hydrodynamic action of the piston 5 to be assisted by that of the jack 90. In fact, on squeezing the elastic key 72, the hollow tang 49 will complete a shorter rotation than the sleeve 61. That rotation, owing to the pin 68 and its engagement in the slots 51 and 67, will result in an axial displacement of the bush 52, and consequently, through the fork 60, of the distributor 87 which moves from the neutral position to the active position whereat the delivery conduit 96 is connected, through the conduit 91 or 92, to the jack 90.

The operation of the assembly 2 is gradual and that graduality is due, additionally to the load increase of the springs 71 and the control from the distributor, also to the damping effect of the two

Chambers 54 and 65 controlled by the calibrated holes 56 and 66.

The hydraulic steering system just described is equipped with a hydromechanical device for discontinuing the steering action on the wheels before the latter strike the detents 100,101 of the motor vehicle axle 40. For that purpose, the ring nuts 77,78 are provided the axial dogs 79,80 whereof, on abutting the dogs 75,76 will block the rotation of the screw shaft 62 before the ring nuts can be brought close against the flanges 73 or 74. Thus, the torque from the steering wheel through the screws 83,84 is transferred to the case 63 whilst the elastic keys 13 and 72 are held pressed in such a position that the distributors 20 and 87 will automatically assume a position whereat in the jack 90 and the chamber 6 or 7 there only prevails static pressure, the hydraulic supply having been cut off. In fact, with the distributors in that position, the oil supplied under pressure will flow to the reservoir and the piston of the jack 90 and the piston 5 stop before the wheels abut against the detents 100 and 101.

As may be appreciated, the hydraulic steering system fully achieves its objects. A basic feature of the invention resides in the particular splitting of the hydraulic circuit into two independent circuits, which enables one actuator assembly to take over from the other in case of malfunctions in either of the hydraulic circuits.

Lacking the hydraulic assistance from the actuator assembly 1, the assembly 2 can fully perform its vehicle steering function with the largest force afforded by the preset calibration of the pressure valve 99, whilst the assembly 1 is entrained mechanically with its circuit freely bypassed through the distributor 20, as assisted by the one-way valves 33, 34 to prevent cavitation within the chambers 6 and 7.

In this case, the steering "feel" would be different, but quite reliable even though the steering torque to be applied to the steering wheel would be slightly higher.

Likewise, if the assembly 2 fails to operate, the assembly 1 performs the steering function at the highest pressure permitted by the valve 32. The assembly 2 is freely bypassed through the distributor 87, whilst the one-way valves 93,94 prevent cavitation in the chambers of the jack 90.

A further advantage of this hydraulic steering system is that the travel limit device is common to both actuator assemblies and serves its purpose before the vehicle wheels are pushed against the detents 100 and 101.

Furthermore, the system is easy to adjust. For this purpose, if for instance the steering wheel turns are to be limited toward one side, the bolt 83 or 84 is removed and the ring nut 77 or 78 is threaded in closer to its related flange 73 or 74, and the bolt 83 or 84 is replaced. Thus, the threading turns on the screw shaft 62 are decreased before the dogs 75,76 can strike the dogs 79,80. Expediently, and as shown best in Figure 3, around the springs 71 of the elastic key 72 there are provided rings 102,103 which act as shoulders while the plates 69 and 70 are brought together, preventing the compressive forces from squeezing the springs. A like expedient is provided for the plates 14, consisting of struts which, on coming in mutual contact as the plates are being brought together, prevent the compression force from squeezing the spring 15.

In order to give the driver a better steering "feel", this hydraulic steering system is advantageously provided with a hydraulic reaction device effective to apply to the steering wheel a proportional effort to that required for steering the vehicle wheels, in accordance with what occurs with a purely mechanical steering system.

That device consists of two pistons 104,105 made axially rigid with the opposed ends of the distributor 20 and slidable in respective seats 106,107 connected to the chambers 6 and 7. Thus, when steering, as the pressure in the chamber 6 or 7 connected to the pump increases, there occurs a concurrent increase in the pressure within the seat 106 or 107 connected to it, which opposes the distributor displacement. Thus, the steering wheel will require application of an increased force to hold the distributor in the position of interconnection of the pump 22 and the chamber 6 or 7.

The responsiveness and stability of the subject steering system also combine with high precision steering. This is because the actuator assembly 2 is conceived such that with a loaded vehicle travelling at a high speed on a standard road bed, only the main assembly is operative, it being envisaged that the assembly 2 cuts in, for a given load on the vehicle, only in tight cornering, manoeuvring, standstill, off-the-road conditions, etc.

This represents an important advantage of this hydraulic steering system over prior ones having a dual circuit in parallel, because instantaneous cutting in of both circuits is quite difficult to achieve with the latter.

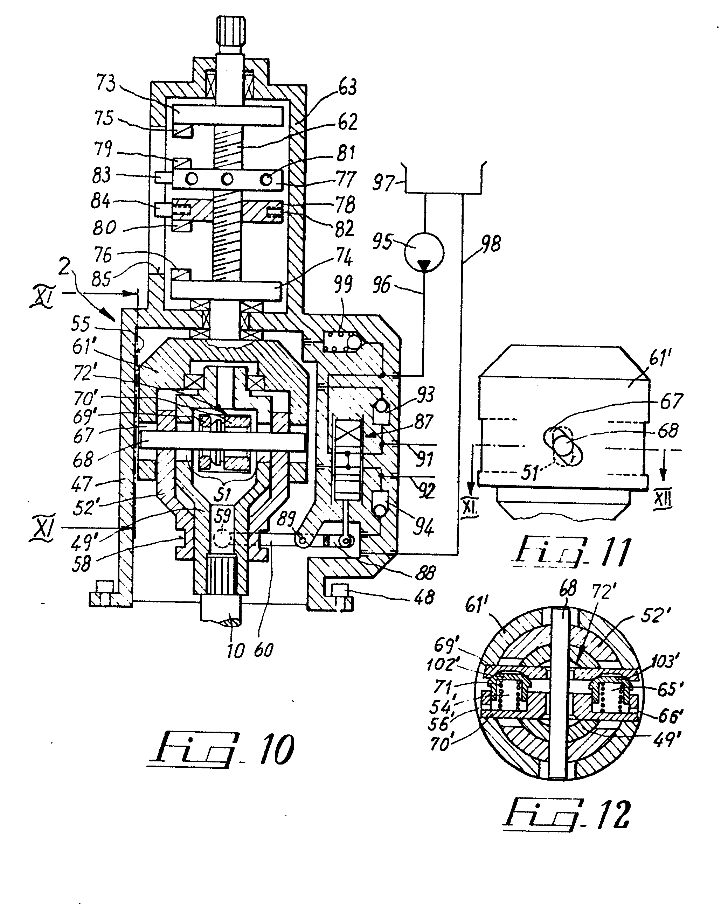

The invention is susceptible to many modifications and changes without departing from this inventive concept. The assembly 2 may be constructed as shown in Figures 10-12, where for convenience of illustration, those parts which are constructed differently from the ones of Figure 9 are proceeded by the index (').

In that embodiment, the plates 69' and 70' have a central hole through which the pin 68 is passed orthogonally. Inside the key 72', there are two cups 102' and 103' which act as travel limit shoulders as the plates 69' and 70' are being brought close to each other and slide sealingly within annular seats formed in the plate 70'. Thus, there are formed damping chambers 54' and 65' which are controlled hydraulically by calibrated holes 56' and 66' in communication with the compartment 55 in the case 47.

If a proportional effort is required at the steering wheel both on the assembly 2 and assembly 1, the distributor 87 of the assembly 2 may be sensitized with the hydraulic reaction by the mere addition of similar pistons to those indicated at 104 and 105 and slidable in respective seats connected to the conduits 91 and 92.

For example, the assembly 1, by means of conduits 108, and the assembly 2, by means of conduits 109, may power several cylinders placed on several steering axles (see Figure 7). In practicing the invention, for a considerable economical advantage, the actuator assembly 2 may be mounted, easily and without substantial alterations, on a conventional single circuit actuator assembly 1, not necessarily identical to the one shown but functionally compatible.

CLAIMS

1. A hydraulic steering system for motor vehicles, comprising a conventional first actuator assembly (1) provided with a self-sustaining hydraulic circuit and a main screw shaft (10) and a second actuator assembly (2) comprising a tang (49) coaxially rigid with said main screw shaft and being housed within a case (47) associated with said first assembly, on which tang there is a sleeve (61) of a secondary screw shaft (62) supported coaxially with said tang and coupled rotatively with the latter through an elastic key (72), between said tang and sleeve there being a differential adapter bush (52) slidable axially along said tang and driving, through a linkage (88), a distributor (87) adapted to connect the delivery conduit (96) of a pressurized fluid feed pump (95) to a jack (90) driving the motor vehicle steering means (38-45), the elastic key (72) of said second assembly being preloaded at a greater force than that (13) of the first assembly (1) and on said secondary screw shaft there being a travel limit device (73-85) for the first and second actuator assemblies, of the mechanically adjusted type, for limiting the steering wheel rotation whereto there corresponds simultaneously discontinuance of the hydraulic force on the two circuits at the maximum steering angle.

2. A hydraulic steering system for motor vehicles, comprising a first actuator assembly (1) with a piston (5) connected to the motor vehicle steering means and guided sealingly within a cylindrical box (3) wherein it defines two chambers (6,7) connectable individually to the delivery conduit (23) of a pressurized fluid feed pump (22) and to a discharge conduit (29), respectively, through a distributor(20) housed within the piston (5) and driven, by means of a lever (19), from a nut screw (11) carried coaxially in the piston and being coupled rotatively to the latter by an elastic key (13), said nut screw (11) being engaged reversibly with a main screw shaft (10) carried rotatably in the box and further comprising a second actuator assembly (2) including a tang (49) coaxially rigid with said main screw shaft (10) and being housed in a case (47) associated with said box, on which tang (49) there is a sleeve (61) of a secondary screw shaft (62) supported coaxially with said tang and being coupled rotatively to the latter through an elastic key (72), between said tang and sleeve there being a differential adapter bush (52) slidable axially along said tang and driving, through a linkage (88), a distributor (87) adapted to connect the delivery conduit (96) of a second pressurized fluid feed pump (95) to a jack (90) for operating the motor vehicle steering means (38-45), the elastic key (87) of said second assembly (2) being preloaded at a greater force than that (13) of the first assembly (1) and on said secondary screw shaft (62) there being a travel limit device (73-85) for the first and second actuator assemblies, of the mechanically adjusted type, for limiting the rotation of the steering wheel whereto there corresponds simultaneously discontinuance of the hydraulic force on the two circuits at the maximum steering angle.

3. A hydraulic steering system according to Claim 2, characterized in that said differential bush (52) comprises a diametral pin (68) the opposed ends whereof engage in oblique slots (67) in the sleeve (61) rigid with said secondary screw shaft (62), and the portion whereof located inside the bush engages in axial slots (51) in the tang (49).

4. A hydraulic steering system according to Claim 3, characterized in that the tang (49) and bush (52) have respective collars (50,57) whereon cup elements (53,64) are slidable which are defined at the ends of the bush (52) and of the sleeve (61), respectively, and define annular chambers (54,65) in communication with the interior of the case (47) through calibrated holes (56,66).

5. A hydraulic steering system according to Claim 2, characterized in that the elastic key (72) which couples the sleeve (61) rotatively to the tang (49) includes a pair of plates (69,70) led diametrally through small windows in the sleeve and tang, between said plates there being preloaded springs (71).

6. A hydraulic steering system according to Claim 5, characterized in that the plates (69',70') have a center hole wherethrough the pin (68) is led orthogonally, on one of said plates there bearing two cups (102',103') which slide sealingly within annular seats formed in the other plate, so as to form damping chambers (54',65') in communication with the case (47) interior through calibrated holes (56',66').

7. A hydraulic steering system according to Claim 2, characterized in that the bush (52) has an external groove (58) of annular shape wherein there are engaged a pair of roller-mounted pads (59) articulated on the ends of prongs of a fork (60) journalled in the case and connected to the distributor (87).

8. A hydraulic steering system according to Claim 2, characterized in that said device for adjusting the maximum steering angle comprises a pair of flanges (73,74) rigid with the opposed ends of said secondary screw shaft (62) and a pair of ring nuts (77,78) threaded onto the latter, said flanges and ring nuts having, on the juxtaposed faces, axial dogs (75,76;79,80) and said ring nuts being formed with radial holes (81,82) distributed peripherally for engagement with bolts (83,84) having sliding heads in axial slots (85) of a case (63) rigid with the first-mentioned case (47), said dogs (75,76;79,80) having a smaller height than the pitch of the secondary screw shaft (62) for mutual abutment at a preset rotation of the steering wheel.

Fig. 1

Fig. 2

Fig. 3

Fig. 4

Fig. 5

Fig. 6

0185911

Fig. 8

Fig. 7

0185911

_Fig_ 9

Fig. 10

Fig. 11

Fig. 12